# EUROPEAN PATENT SPECIFICATION

(11) **EP 0 510 697 B1**
(45) Date of publication and mention of the grant of the patent: **28.08.1996**
(21) Application number: 92107071.0
(22) Date of filing: 24.04.1992
(51) Int. Cl.: G03B 7/16

(54) **Flash synchronising device**
Blitzlichtsynchronisierungseinrichtung
Dispositif de synchronisation pour flash

(30) Priority: 25.04.1991 JP 29142/91
(43) Date of publication of application: 28.10.1992
(73) Proprietor: SEIKOSHA CO., LTD., Chuo-ku, Tokyo (JP)
(72) Inventor: Tagami, Shigeru, c/o Seikosha Co. Ltd., Yotsukaido-shi, Chiba-ken (JP); Yamazaki, Hiroshi, c/o Seikosha Co. Ltd., Yotsukaido-shi, Chiba-ken (JP); Aoyama, Tomihiko, c/o Seikosha Co. Ltd., Yotsukaido-shi, Chiba-ken (JP); Nakajima, Yuji, c/o Seikosha Co. Ltd., Yotsukaido-shi, Chiba-ken (JP); Hayakawa, Teruyo, c/o Seikosha Co. Ltd., Yotsukaido-shi, Chiba-ken (JP); Imano, Seiichi, c/o Seikosha Co. Ltd., Yotsukaido-shi, Chiba-ken (JP)
(74) Representative: Grünecker, Kinkeldey, Stockmair & Schwanhäusser Anwaltssozietät

(56) References cited:
- US-A- 4 469 989
- US-A- 4 603 954
- US-A- 4 779 115
- US-A- 4 806 963
- US-A- 4 897 684

## Description

The present invention relates generally to a flash synchronising device with a multi-flash function, in which one of the flashes synchronising with diaphragm values of the camera synchronises with the maximum diaphragm value to thereby effect the flash and in which a subject is properly irradiated with the flashed light when effecting diaphragm priority photographing.

Generally, in a flash synchronising device packaged into a camera with a multi-flash function, a constant amount of flash light is emitted a plurality of times in synchronisation with shuter operations. The plurality of light emissions are performed at substantially equal intervals with respect to the time base but are irrespective of a magnitude of an aperture area of the shutter. For this reason, an average flash effect is obtained. However, an exposure quantity is the same for all the portions, resulting in such drawbacks that a vividness is not seen in the photographed picture, and the photo is hard to see.

Elements for determining an exposure for taking a photo are a film sensitivity, a shutter speed, a diaphragm and a brightness of a subject. If the film sensitivity and the brightness of the subject among these elements are determined, a proper exposure value is determined.

Automatic exposure (AE) control is executed by setting the shutter speed and the diaphragm value so that a proper exposure C has its exposure value on the basis of the subject illuminance E, a film ASA sensitivity S, a diaphragm value F and an exposure time T.

Under the AE control, determining whether the shutter speed or the diaphragm, or determining all the elements by a camera is selected depending on purposes of photos. On the occasion of subjects in which the depth of field is required to be enhanced - e.g., a still-life photography, a group photography (the depth is needed) and a portrait (the background is out of focus while decreasing the depth), the diaphragm priority AE is preferable. If the photographer sets the diaphragm value or, alternatively, the diaphragm value is determined from a result of measuring the distance up to the subject, the shutter speed is automatically set.

On the other hand, a flashmatic mechanism where the camera interlocks with the electronic flash is a mechanism for controlling, when the irradiation distance varies, the diaphragm value interlocking therewith on the basis of GN (guide number) - F . D expressed by a product of a diaphragm value indicating a light quantity of the flash and an irradiation distance D (up to the subject).

For controlling the proper exposure by interlocking the flash with AE of the camera, the guide member of the flash is set, and thereafter the diaphragm is automatically adjusted simply by adjusting the distance.

The above-described flashmatic mechanism includes an auto-flashmatic mechanism constructed to emit no light when the natural light suffices for an exposure quantity of the subject but automatically emit the light under such conditions that a blur is caused due to an ambient darkness.

Document US-A-4 897 684 describes an auto-flash photographing system including a flash lamp unit, a photometry unit, a reference setting unit and a trigger unit. The flash lamps are fired more than once while the shutter is set in a fully open condition for obtaining an optimal exposure condition.

The system for setting the aperture of a camera for flash photography is known from document US-A-4 806 963. Thereby, a minimum aperture being computed in dependence on parameters as the distance to the subject, the guide number and the film sensitivity is compared with a predetermined aperture value. The computed aperture value is changed for obtaining an optimal exposure.

It is the object of the present invention to provide a flash synchronizing device with multi-flash means being adapted for adjusting the exposure conditions by control means having a simple structure and an improved reliability.

This object is solved by the flash synchronizing device with the features of claim 1. Advantageous embodiments of the present invention are defined in the dependent claims.

According to an embodiment of the present invention, the synchronizing device is capable of avoiding the above-described drawbacks and to obtain a vivid photo by providing a maximum diaphragm value synchronizing flash means for synchronization with the maximum diaphragm value and enhancing an image of a subject when photographing the moving subject by the multi-flash.

According to an embodiment of the present invention, there is provided a flash synchronising device comprising: a shutter serving as a diaphragm; a multi-flash means for effecting a plurality of flashes during a period from a start of exposure of the shutter to an end thereof; and a maximum diaphragm value synchronising flash means by which one of the flashes synchronising with the diaphragm values by the multi-flash means synchronises with the maximum diaphragm value among a series of diaphragm values of the shutter.

When the photographer selects the diaphragm priority photographing under the auto exposure control including the flashmatic mechanism, and if a constant guide number is set, it follows that the photographing distance is restricted by the selected diaphragm. A quantity of transmitted light which corresponds to the subject distance is not controlled, resulting in a photo with an improper exposure quantity in some cases.

Further, it is impossible to select an emission timing of flashed light.

It is a further object of the present invention, which has been devised to obviate the defects described above, to provide a flash synchronising device capable of effecting proper flash photographing corresponding to a distance from the flash to a subject even when performing diaphragm priority photographing, further selecting an emission timing of the flashed light and taking photos exhibiting different effects.

According to a further embodiment of the present invention, there is provided a flash synchronising device comprising: a photometric means for measuring a brightness of a subject; a focusing means for measuring a distance up to the subject; an exposure quantity setting means for setting an exposure quantity from a diaphragm value obtained by the photometric means or a diaphragm value predetermined by the photographer; and a flash control means for operating an electronic flash, characterised by a second diaphragm setting means for computing a second diaphragm value from the distance measured by the focusing means and from a light quantity of the electronic flash and further outputting the second diaphragm value to the exposure quantity setting means and by the flash control means being operated in synchronisation with the second diaphragm value.

### Brief Description of the Drawings

Fig. 1 is a perspective view showing one embodiment of a flash synchronising device according to the present invention.

Fig. 2 is a block diagram showing one embodiment of the flash synchronising device according to the present invention.

Fig. 3 is a characteristic diagram of the flash synchronising device of this invention.

Fig. 4 is a characteristic diagram of the flash synchronising device of this invention.

Fig. 5 is a block diagram illustrating a picture photographed by the flash synchronising device of this invention.

Fig. 6 is a block diagram showing one embodiment in which a flash synchronising device according to the present invention is applied.

Fig. 7 is a diagram showing a relation between an emission timing of flashed light and an aperture area in accordance with the embodiment shown in Fig. 6.

Fig. 8 is a diagram showing a relation between the emission timing of flashed light and the aperture area in accordance with the embodiment shown in Fig. 6.

Fig. 9 is a diagram showing a relation between the emission timing of flashed light and the aperture area in accordance with the embodiment shown in Fig. 6.

Fig. 10 is a diagram showing a relation between the emission timing of flashed light and the aperture area in accordance with the embodiment shown in Fig. 6.

Fig. 11 is a diagram showing a relation between the emission timing of flashed light and the aperture area in accordance with the embodiment shown in Fig. 6.

Fig. 12 is a diagram showing a relation between the emission timing of flashed light and the aperture area in accordance with the embodiment shown in Fig. 6.

Fig. 13 is a diagram showing a relation between the emission timing of flashed light and the aperture area in accordance with the embodiment shown in Fig. 6.

Fig. 14 is a diagram showing a relation between the emission timing of flashed light and the aperture area in accordance with the embodiment shown in Fig. 6.

### Operation

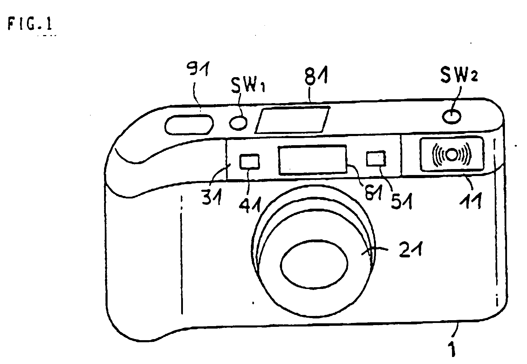

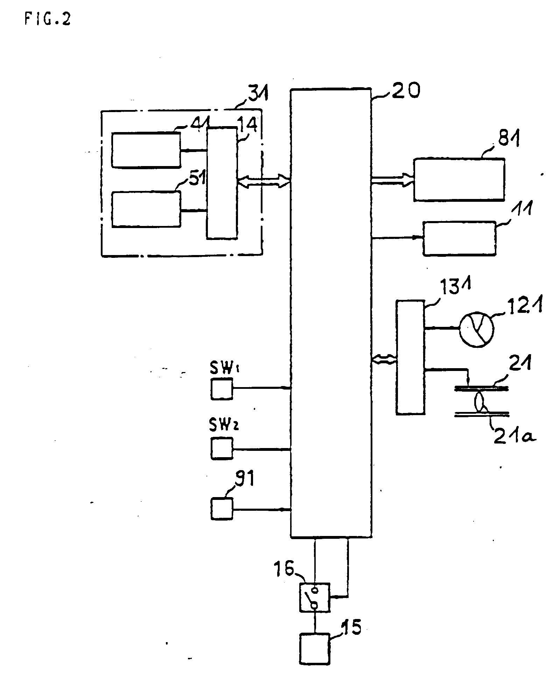

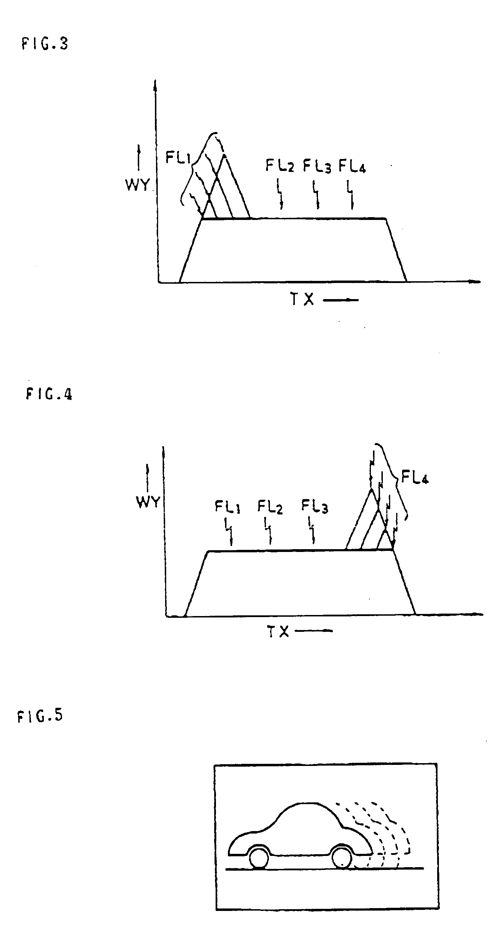

In a #2 multi-flash mode, when an electronic flash depicted in Figs. 1 and 2 flashes, irradiations of luminous fluxes FL₁ - FL₄ illustrated in Fig. 4 take place synchronising with shutter waveforms shaped by a time base TX of the X axis and a shutter aperture area WY of the Y axis. For this reason, in a photographed picture, as depicted in Fig. 5, the optimum flash is developed in the travelling direction of a moving subject, thereby enhancing the luminous flux FL₄. The luminous fluxes FL₁, FL₂, FL₃ are subjected to the underexposure. In the case of enhancing the last picture of the moving subject in the travelling direction, the position of a multi-flash selecting switch SW₂ is selectively set to a #2 multi-flash position. Fig. 4 illustrates a shutter waveform in this case. Further, in the case of enhancing a first image of the moving object in the travelling direction, the position of the multi-flash selecting switch SW₂ is selectively set to a #1 multi-flash position. Fig. 3 illustrates a shutter waveform in this case.

### Embodiment

One embodiment of a flash synchronising device according to the present invention will hereinafter be described in detail with reference to Figs. 1 - 5. In the flash synchronising device of this invention, as illustrated in Fig. 1, a multi-flash selecting switch SW₂ is mounted on an upper surface of a body 1 incorporating a multi-flash function. Further, in addition to the multi-flash selecting switch SW₂, the upper surface of the body is mounted with a liquid crystal display unit 81, a release button 91, a programme selecting switch SW₁ and a photographing mode setting switch SW₁. Packaged further on the front surface of the body 1 are an AF unit 31 comprising: a light receiving module 51 and a light emitting module 41, a finder 61 and an electronic flash 11. The body 1 is also equipped with a lens barrel 21.

The light receiving module 51 and the light emitting module 41 of the AF unit 31 are, as depicted in Fig. 2, connected to a CPU 20 through an AF interface 14 incorporating A/D converting function and an electrooptical converting function. Connected further to the CPU 20 are the programme selecting switch SW₁ and the multi-flash selecting switch SW₂. When depressing the programme selecting switch SW₁ with a piano touch, a shutter speed priority mode, a diaphragm mode and an optimum exposure combination mode are sequentially selected under the programme control. The selected programme control is displayed on the liquid crystal display unit 81. When depressing the multi-flash selecting switch SW₂ with the piano touch, a single flash mode a #1 multi-flash mode and a #2 multi-flash mode are sequentially selected. The selected positions are displayed on the liquid crystal display unit 81. Note that the #1 multi-flash mode is a mode in which the flash is effected synchronising with such a programme AE that an aperture area comes to the maximum at an initial, while the #2 multi-flash mode is a mode in which the flash is performed synchronising with such a programme AE that the aperture area comes to the maximum at a terminal of the time base.

Besides, the release buttom 91 connected to the CPU 20 serves as a 2-step operation switch; and a battery switch 16 is closed by a one-step operation with the result that a battery 15 is connected to the CPU 20. In a state where the battery 15 is connected to the CPU 20, photometric and focusing operations are effected by an optical unit constructed of the light receiving module 51 and the light emitting module 41 of the AF unit 31. An arithmetic circuit provided in the CPU 20 computes photometric and focusing data. Based on the arithmetic results, the CPU 20 controls the shutter aperture 121 and a lens 21a of the lens barrel 21 through a shutter lens drive IC131.

Further, the CPU 20 incorporates a maximum diaphragm value synchronising flash programme by which the synchronising flash takes place at the initial or end of the photographing. When executing the maximum diaphragm value synchronising flash programme, a proper exposure is produced due to flashing in such a position that the aperture area of the shutter is large; and an underexposure is caused with a small aperture area in the case of other flashing on the time base.

In the flash synchronising device described above, when manipulating the multi-flash selecting switch SW₂ illustrated in Figs. 1 and 2 with the piano touch and half-depressing the release button 91 after selectively setting the position of the multi-flash selecting switch SW₂ in the #2 multi-flash mode, the display unit 81 displays an indication of launching into such a shutter opening/closing operation that the aperture area is maximised at the terminal of the time base. Subsequently, when full-depressing the release button 91, the electronic flash 11 flashes in synchronisation with the shutter opening/closing operation. Upon flashing of the electronic flash 11, irradiations of luminous fluxes FL₁ - FL₄ illustrated in Fig. 4 take place synchronising with shutter waveforms shaped by a time base TX of the X axis and a shutter operture area WY of the Y axis. For this reason, in a photographed picture, as depicted in Fig. 5, the optimum flash is developed in the travelling direction of a moving subject, thereby enhancing the luminous flux FL₄. The luminous fluxes FL₁, FL₂, FL₃ are subjected to the underexposure. Further, in the case of enhancing a first image of the moving subject in the travelling direction, the position of the multi-flash selecting switch SW₂ is selectively set to a #1 multi-flash position. Fig. 3 illustrates a shutter waveform in this case.

The flash synchronising device according to the present invention comprises: the shutter serving as a diaphragm; a multi-flash means for effecting a plurality of flashes during a period from a start of exposure of the shutter capable of controlling a plurality of diaphragm values to an end thereof; and a maximum diaphragm value synchronising flash means by which one of flashes synchronising with the diaphragm values by the multi-flash means synchronises with the maximum diaphragm value among a series of diaphragm values of the shutter Hence, there is exhibited an advantage of obtaining a vivid photo with enhanced images when photographing the moving subject by the multi-flash.

The diaphragm value is selected by the photographer or by the exposure setting means as an exposure quantity from a subject brightness measured by the photometric means. If the exposure quantity set by the exposure setting means is sufficient by comparing it with a predetermined exposure quantity needed for the subject, a shutter driving means for releasing the shutter is operated. In the case of an underexposure, the exposure setting means operates the second diaphragm setting means for computing the second diaphragm value from the guide number of the electronic flash and the subject distance measured by the focusing means. The diaphragm is set to the second diaphragm value computed by the second diaphragm setting means. The electronic flash is flashed by the flash control means. The light is emitted from the electronic flash in synchronisation with a timing at which the shutter is released to open the aperture; or the aperture is closed after an exposure time has elapsed. The diaphragm is returned to the diaphragm value set by the exposure setting means during an exposure time for which no light is emitted from the electronic flash. For this reason, even if the diaphragm priority photographing is performed, and when the subject is irradiated with the flashed light, an image with a proper exposure quantity is obtained by securing the diaphragm value corresponding to the photographing distance.

One embodiment to which a flash synchronising device according to the present invention is applied will be described with reference to the drawings.

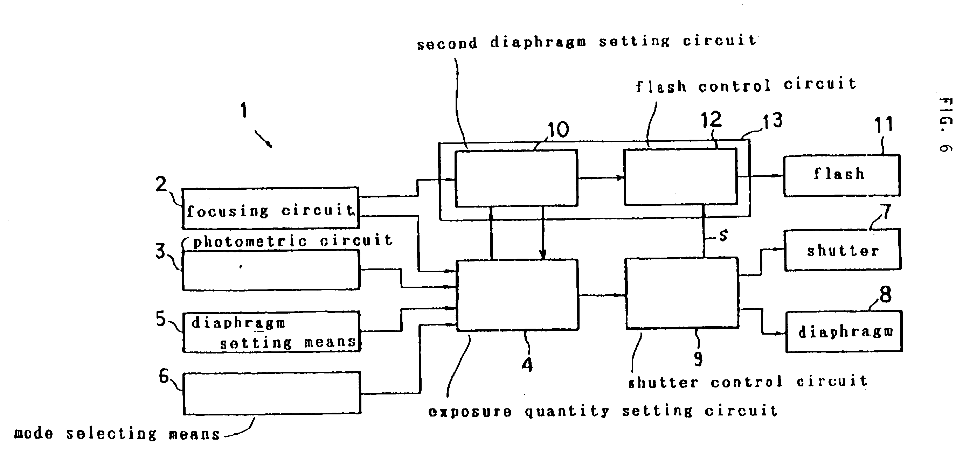

As illustrated in a block diagram of Fig. 6, a camera 1 intended to perform diaphragm priority photographing includes an unillustrated light receiving module having light receiving elements PSD for receiving reflected light which has emitted towards a subject. The camera is also provided with a focusing circuit 2 defined as a focusing means for measuring a distance up to the subject from the light information received by the light receiving module. The camera is further provided with a photometric circuit 3 defined as a photometric means for measuring a brightness of the subject from the light information received by photometric elements SPD and with an exposure quantity setting circuit 4 defined as an exposure quantity setting means to which the brightness of the subject is inputted together with the information, concerning the distance up to the subject, of the focusing circuit 2. The exposure quantity setting circuit 4 computes an exposure time by inputting diaphragm information of a mode selecting means 6 for selecting diaphragm photographing or a diaphragm value set by a manual diaphragm setting means 5 from the exposure quantity together with an exposure index, etc. as a film characteristic inputted further thereto. Provided therein is a shutter control circuit 9 defined as a shutter control means for operating a shutter 7 and a diaphragm 8 by transmitting a drive signal in the case of an exposure quantity appropriate to photographing of the subject from the arithmetically obtained exposure time. Incorporated in the camera 1 described above is a flash synchronising device 13 constructed of a second diaphragm setting circuit 10 controlled by the exposure quantity setting circuit 4 in order to effect flash photograhing on the occasion of an underexposure for the exposure time obtained by the exposure quantity setting circuit 4 and of a flash control circuit 12 defined as a flash control means for inputting a synchronising light emitting signal S from the shutter control circuit 9. The second diaphragm setting circuit 10 inputs the distance up to the subject from the focusing circuit 2 and thereby computes a second diaphragm value F2 from a guide number. The second diaphragm value F2 computed by the second diaphragm setting circuit 10 is inputted to the exposure quantity setting circuit 4, whereby the diaphragm 8 is set to the second diaphragm value F2 by the shutter control circuit 9. Then, in response to the synchronising light emitting signal S, the flash control circuit 12 induces an emission of light of an electronic flash (hereinafter referred to as a flash) 11 including a xenon discharge tube.

In the case of executing the diaphragm priority photographing by use of the thus constructed camera 1, the light receiving module receives the light with which the subject is irradiated. The focusing circuit 2 thereby obtains a distance to the subject, while the photometric circuit 3 obtains a brightness of the subject. When the photographer manually sets the diaphragm 8, the information from the diaphragm setting means 5 is inputted to the exposure quantity setting circuit 4 together with the distance up to the subject and the brightness thereof; or alternatively when selecting the diaphragm priority photographing, the information from the mode selecting means 6 is inputted to the circuit 4. The exposure quantity setting circuit 4 sets an exposure time from the exposure quantity as well as from the diaphragm value. If the exposure quantity predetermined from the brightness of the subject is sufficient, the shutter control circuit 9 sets the diaphragm 8 to a set value to provide a desired aperture area, whereby the exposure quantity setting circuit 4 operates the shutter 8 in such a time as to obtain a proper exposure quantity. In the case of an underexposure, the exposure quantity setting circuit 4 operates the flash control circuit 12 by an output of the photometric circuit 3, thus effecting flash photographing.

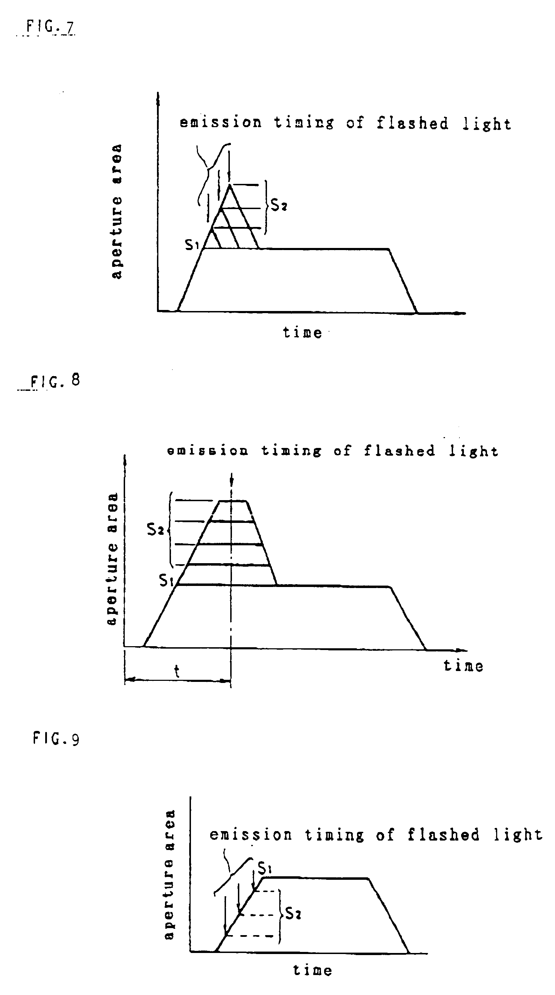

When performing the flash photographing, the second diaphragm setting circuit 10 inputs a subject distance D measured by the focusing circuit 2 in response to the drive signal of the exposure quantity setting circuit 4, thereby obtaining a second diaphragm value F2 from the guide member. Immediately, the diaphragm 8 is changed from the diaphragm value F1 manually set or arithmetically set by the exposure quantity setting circuit 4 to the second diaphragm value F2 through the shutter control circuit 9, thus changing the aperture area. The synchronising light emitting signal S is outputted to the flash control circuit 12. As illustrated in Fig. 7, if the quantity of the flashed light is insufficient with the set diaphragm value F1, the aperture area is expanded from S₁ to S₂, resulting in a large aperture. When reaching the desired aperture area S₂, the flash 11 is flashed, and the aperture area is again contracted from S₂ down to S₁. The diaphragm value is returned to F1, and the flash photographing is controlled by a triangular waveform. Further, as depicted in Fig. 8, the aperture area is expanded from S₁ to S₂, and after a desired time t has elapsed, the light is emitted from the discharge tube of the flash 11. The flash photographing may be controlled by a trapezoidal waveform to return the diaphragm value to F1.

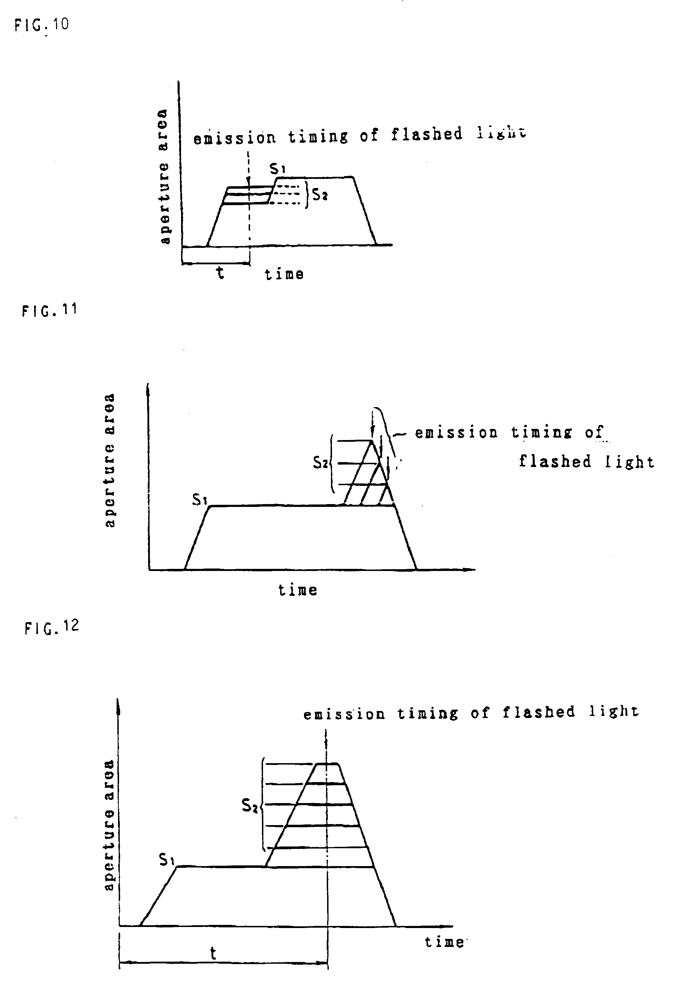

Besides, if the quantity of flashed light is over with the set diaphragm value F1, and when the subject exists closely in the case of counter-light, as illustrated in Fig. 9, the diaphragm 8 is set to the diaphragm value F1 by the shutter control circuit 9, and the aperture area is set thereby to S₁. When reaching the aperture area S₂ - i.e., a small aperture - corresponding to the diaphragm value F2 in the course of this process, the flash 11 is flashed. Subsequently, the diaphragm value is set to F1 by changing the aperture area from S₂ to S₁. Further, as illustrated in Fig. 10, setting the aperture area is ended with S₂ corresponding to the second diaphragm value F2. After the desired time t has passed, the light is emitted from the flash 11. The aperture area is set to S1 corresponding to the diaphragm value F1, whereby the flash photographing may be controlled by the trapezoidal waveform.

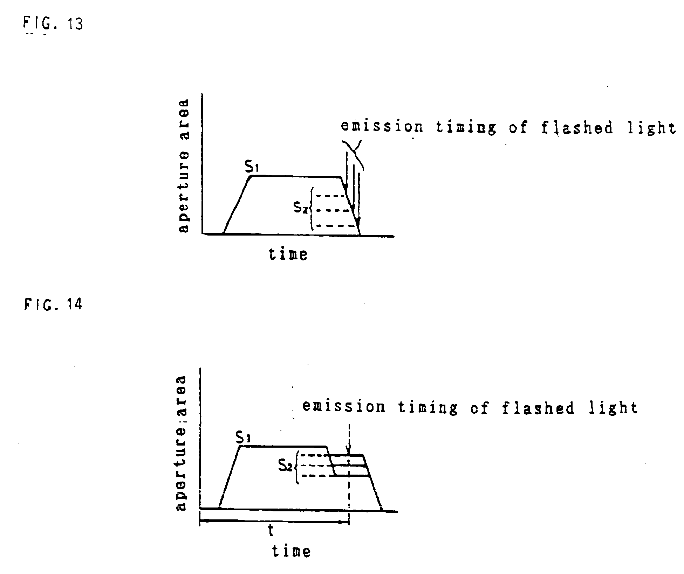

Note that the second diaphragm setting circuit 10 may include a timing circuit by which the diaphragm 8 can be set to the second diaphragm value F2 at a desired timing. Further, as illustrated in Fig. 11, the aperture area is expanded from S₁ to S₂ to obtain the second diaphragm value F2 in the latter period of exposure, and that is controlled by the triangular waveform. When the desired aperture area S₂ is thus reached, the flash 11 can be flashed. Alternatively, as shown in Fig. 12, the aperture area is expanded from S₁ to S₂ to obtain the second diaphragm value F2 in the latter period of exposure, and that is controlled by the trapezoidal waveform. After the desired time t has elapsed, the flash photographing can be also effected in accordance with the timing circuit for causing an emission of light from the flash 11. In the case of an overexposure caused by the flash light, as illustrated in Fig. 13, similarly the aperture area is diminished from S₁ down to S₂ to obtain the second diaphragm value F2 in the latter period of exposure. The flash 11 is flashed when the desired aperture area S₂ is attained. Alternatively, as depicted in Fig. 14, the aperture area is diminished from S₁ down to S₂ to obtain the second diaphragm value F2 in the latter period of exposure, and that is controlled by the trapezoidal waveform. After the desired time t has passed, the flash photographing can be also performed in accordance with the timing circuit for causing the emission of light from the flash 11.

It is to be noted that in the embodiment discussed above, the shutter and the diaphragm are provided, however, the triangular and trapezoidal waveforms may be controlled by integrally constructing the shutter serving as the diaphragm.

Besides, the invention is not limited to the embodiment described above. Variant forms based on the concept of the present invention are, however, possible.

### Advantages of the Invention

As is obvious from the description given above, the flash synchronising device of the present invention incorporates the second diaphragm setting means for setting to the second diaphragm corresponding to the distance up to the subject when emitting the flashed light via the set diaphragm even in the case of effecting the diaphragm priority photographing. Emitted is the flashed light with which the subject is irradiated in synchronisation with the diaphragm value thereof. A photo with a proper exposure can be thereby obtained. Besides, a depth of field becomes greater because of the diaphragm priority photographing. Obtained is a photo in which not only the subject but also the background is well focused. Photos photographing exhibiting different effects can be taken by selecting the execution in the early period or in the latter period of the timing exposure time based on the emission of flashed light.

## Claims

1. A flash synchronising device comprising:
a shutter (121, 7) and a diaphragm (8) with a variable aperture, a controlling unit (20, 9) arranged to control said variable aperture, and
multi-flash means (11) for effecting a plurality of flashes (FL₁, ... FL₄) during a period from a start of exposure of the shutter to an end thereof,
**characterized in that** said controlling unit sets said
aperture to have a maximum value (S₂) for one of the flashes while having smaller values (S₁) for the remaining flashes.

2. A flash synchronising device according to claim 1, wherein the controlling unit (20) comprises a maximum diaphragm value synchronising flash means which controls the aperture in such a manner that said maximum value of the aperture represents a proper exposure, while said smaller values represent an under-exposure.

3. A flash synchronising device according to claim 1, further comprising:
a photometric means (3) for measuring the brightness of the object, a focusing means (2) for measuring the distance to the object, and exposure quantity setting means (4) for setting the exposure quantity from a first diaphragm value obtained by first diaphragm setting means (5) or by a preselection by the photographer, and a flash control means (12) for operating said multi-flash means (11),
wherein the controlling unit comprises a second diaphragm setting means (10) for computing a second diaphragm value from the distance measured by the focusing means and from the light quantity of the electronic flash reflected from the object and further outputting the second diaphragm value to the exposure quantity setting means (4),
the flash control means (12) being operated in synchronisation with the second diaphragm value.

4. A flash synchronising device according to claim 2 or 3, wherein the shutter (7) and the diaphragm (8) are integrally constructed.

## Patentansprüche

1. Eine Blitzlichtsynchronisierungsvorrichtung mit:
einen Verschluß(121, 7) und einer Blende (8) mit einer veränderbaren Öffnung, einer Steuereinheit (20, 9), die zum Steuern der veränderbaren Öffnung vorgesehen ist, und
einer Mehrfachblitzvorrichtung (11) zum Bewirken einer Vielzahl von Blitzen (FL₁, ... FL₄) während einer Zeitdauer von einem Beginn einer Verschlußbelichtung bis zu einem Ende davon,
**dadurch gekennzeichnet,** daß
die Steuereinheit die Öffnung so einstellt, daß sie einen maximalen Wert (S₂) für einen der Blitze aufweist, während sie für die verbleibenden Blitze kleinere Werte (S₁) aufweist.

2. Eine Blitzlichtsynchronisierungsvorrichtung gemäß Anspruch 1, wobei die Steuereinheit (20) eine Blitzlichtsynchronisierungsvorrichtung für maximalen Blendenwert umfaßt, die die Öffnung auf solche Weise steuert, daß der maximale Wert der Öffnung eine geeignete Belichtung darstellt, während die kleineren Werte eine Unterbelichtung darstellen.

3. Eine Blitzlichtsynchronisierungsvorrichtung gemäß Anspruch 1, die weiter umfaßt:
eine photometrische Vorrichtung (3) zum Messen der Helligkeit des Objekts, eine fokussierende Vorrichtung (2) zum Messen des Abstands zu dem Objekt und eine Belichtungswerteinstellvorrichtung (4) zum Einstellen des Belichtungswerts aus einem ersten Blendenwert, der durch eine erste Blendeneinstellvorrichtung (5) erhalten wird oder durch eine Vorauswahl durch den Photographen, und eine erste Blitzlichtsteuervorrichtung (12) zum Betreiben der Mehrfachblitzvorrichtung (11),
wobei die Steuereinheit eine zweite Blendeneinstellvorrichtung (10) umfaßt zum Berechnen eines zweiten Blendenwerts aus der durch die Fokussiervorrichtung gemessenen Entfernung und aus der von dem Objekt reflektierten Lichtmenge des elektronischen Blitzes und weiter zum Ausgeben des zweiten Blendenwerts an die Belichtungswerteinstellvorrichtung (4),
wobei die Blitzlichtsteuervorrichtung (12) in Synchronisation mit dem zweiten Blendenwert betrieben wird.

4. Eine Blitzlichtsynchronisierungsvorrichtung gemäß Anspruch 2 oder 3, wobei der Verschluß (7) und die Blende (8) integral aufgebaut sind.

## Revendications

1. Dispositif de synchronisation pour flash comprenant :
un obturateur (121, 7) et un diaphragme (8) à ouverture variable, une unité de commande (20, 9) agencée de manière à commander ladite ouverture variable, et
des moyens multi-flash (11) destinés à effectuer une pluralité de flashes (FL1,...FL4) durant une période allant d'un début d'exposition de l'obturateur à une fin de celle-ci,
caractérisé en ce que ladite unité de commande règle ladite ouverture de manière à ce qu'elle ait une valeur maximale (S2) pour l'un des flashes tout en ayant des valeurs inférieures (S1) pour les flashes restants.

2. Dispositif de synchronisation de flash selon la revendication 1, dans lequel l'unité de commande (20) comprend des moyens de flash synchronisant la valeur de diaphragme maximum qui commandent l'ouverture de telle manière que ladite valeur maximale de l'ouverture représente une exposition adaptée, tandis que lesdites valeurs inférieures représentent une sous-exposition.

3. Dispositif de synchronisation de flash selon la revendication 1, comprenant en outre :
des moyens photométriques (3) pour mesurer la luminosité de l'objet, des moyens de mise au point (2) pour mesurer la distance jusqu'à l'objet, et des moyens de réglage de quantité d'exposition (4) pour régler la quantité d'exposition à partir d'une première valeur de diaphragme obtenue par des premiers moyens de réglage de diaphragme (5) ou par une présélection par le photographe, et des moyens de commande de flash (12) pour actionner lesdits moyens multi-flash (11),
dans lequel l'unité de commande comprend des seconds moyens de réglage de diaphragme (10) pour calculer une seconde valeur de diaphragme à partir de la distance mesurée par les moyens de mise au point en à partir de la quantité de lumière du flash électronique réfléchie depuis l'objet et pour fournir en outre en sortie la seconde valeur de diaphragme aux moyens de réglage de quantité d'exposition (4),
les moyens de commande de flash (12) étant actionnés en synchronisation avec la seconde valeur de diaphragme.

4. Dispositif de synchronisation de flash selon la revendication 2 ou 3, dans lequel l'obturateur (7) et le diaphragme (8) sont construits d'un seul tenant.
